# EUROPEAN PATENT APPLICATION

(11) **EP 4 372 369 A1**
(43) Date of publication of application: **22.05.2024**
(21) Application number: 22207928.7
(22) Date of filing: 16.11.2022
(51) Int. Cl.: G01N 23/046

(54) **METHOD AND SYSTEM FOR ASSESSING QUALITY OF POLYCRYSTALLINE GEM MATERIAL**

(71) Applicant: SATT Gems AG, 4051 Basel (CH)
(72) Inventor: KRZEMNICKI, Michael S., 4054 Basel (CH); Franz, Leander, 79539 Lörrach (DE); Hänggi, Philipp, 4208 Nunnungen (CH)
(74) Representative: BOVARD AG

(57) **Abstract**

The present invention relates to a method and a system for assessing the quality of a polycrystalline gem material using an X-ray microtomography imaging, wherein the assessment comprises a three-dimensional map of the gem material, comprising the steps of:
Providing the polycrystalline gem material to a sample holder of an imaging apparatus such that the polycrystalline gem material to be scanned is located in a radiation path comprising at least one emitter and at least one detector synchronised by a processor;
Radiating the mounted polycrystalline gem material with the emitter having at least one X-ray source while either moving the sample holder relative to the at least one X-ray source and the at least one detector, or vice versa;
Detecting emitted attenuated radiation of raw data with the detector;
Processing the raw data by creating a virtual three-dimensional model of the analysed polycrystalline gem material, and followed by graphic visualisation by using specific attenuation coefficient attribution-algorithms based on X-ray absorptivity levels;
Removing the polycrystalline gem material from the sample holder.

## Description

### Technical Field of the Invention

The present invention relates to the field of gemstones, in particular to polycrystalline stones such as chalcedony, nephrite, serpentinite, and jadeite. More specifically, it relates to a method and a system for assessing the quality of a polycrystalline gem material.

### Background Art

A polycrystalline gem material is a rock or part of a rock, which formed by a geological process, and which has qualities such as beauty, durability, and rarity to be used for adornment in jewellery or art objects. It usually consists of numerous tiny mineral grains intergrown in a dense texture.

These gem materials have to be fashioned (cut and polished) to one or several smaller gemstones, to be usable in jewellery. During this fashioning process, a large part of the rough is normally grinded down and consequently the resulting gemstone(s) may represent only a small fraction of the original rough form.

The quality of polycrystalline gem materials is commonly related to its homogeneity in terms of mineral composition and grain size, combined with the absence of fractures and other textural instabilities (e.g., cavities, grain boundaries).

In many cases, the quality and value are highest for polycrystalline gem materials which consist only of one specific mineral species (e.g., jadeite), present as very fine and densely packed mineral grains. This also favors transparency of such a polycrystalline gem material, creating a so-called 'glassy' visual appearance in case the mineral grains by themselves are transparent. Admixture of other mineral phases may strongly affect the visual beauty and transparency of a polycrystalline material. The quality is even further lowered when open cavities, fissures or fractures are present, which may severely impact polycrystalline gem materials visually but also in durability and usability.

Due to the fact that rough stones are often rather large, nontransparent, fractured, or even covered with a mineral coating or weathering crust, hence the fashioning is usually challenging. Moreover, the decision of how to cut the rough stone in parts is highly connected with the aim to maximize the yield in value and size of the resulting gemstone. A wrong cutting decision may have a great and negative financial impact. This is especially the case for polycrystalline gem materials such as for example jadeite or nephrite-jade, which may contain numerous inhomogeneities (fissures, grain boundaries, accessory minerals) within the volume of a stone, thus significantly reducing the potential quality of gemstones cut from such a material.

The quality of rough or fashioned stones is basically judged visually from outside, often using strong torch lamps to have insight into the material and occasionally UV-light to check for compositional variations. This can be assisted by using reference stones of different quality levels, with which a polycrystalline gem material then can be compared to assess its quality. In case such a (rough) polycrystalline gem material is covered by a weathering crust, these traditional methods often fail. In the gem trade, such stones are called "gamble" stones, i.e., decision taking (Buying or not? How to cut and polish?) is considered a high risk, with high values at stake.

In addition to above mentioned traditional approach, more sophisticated analytical methods may be used such as with infrared spectroscopy and Raman spectroscopy for mineral identification and treatment detection.

Investigation of mineral composition and texture on research samples can be carried out by using microscopic methods and scanning electron microscopy (backscattered electron mode, often combined with chemical analyses using electron microprobe, energy-dispersive X-ray fluorescence, and laser ablation ICP mass spectrometry. All these sophisticated methods usually require specific sample preparation and only allow detailed analyses at the surface of a sample of quite small dimensions.

### Summary of the invention

The inventors of the present invention have found out at least a part of or complete remedy for the above-discussed problems. The proposed method, system and use of the present invention allow a non-invasive inspection of the internal texture, composition, or spatial distribution of a polycrystalline gem material in three-dimension at high resolution compared to the existing methods. Moreover, by applying appropriate algorithms, the analysed raw data can be processed in such a way that for example material inhomogeneities and distribution, fissures and cavity along grain boundaries can be clearly identified, and be visualised in three-dimension and/or be transformed into diagrams for better assessment of the quality of the polycrystalline gem material.

According to a first aspect of the invention, it relates to a method of assessing the quality of a polycrystalline gem material using an X-ray microtomography imaging, wherein the assessment comprises a three-dimensional map of the gem material, comprising the steps of:
Providing the polycrystalline gem material to a sample holder of an imaging apparatus such that the polycrystalline gem material to be scanned is located in a radiation path comprising at least one emitter and at least one detector synchronised by a processor;
Radiating the mounted polycrystalline gem material with the emitter having at least one X-ray source while either moving the sample holder relative to the at least one X-ray source and the at least one detector, or vice versa;
Detecting emitted attenuated radiation of raw data with the detector;
Processing the raw data by creating a virtual three-dimensional model of the analysed polycrystalline gem material, and followed by visualisation by using specific attenuation coefficient attribution-algorithms based on X-ray absorptivity levels;
Removing the polycrystalline gem material from the sample holder.

According to a second aspect of the invention, it relates to a system for assessing the quality of a polycrystalline gem material, wherein the assessment comprises a three-dimensional map of the gem material comprising:
A sample holder provided to receive a polycrystalline gem material;
At least one emitter comprising an X-ray source suitable for X-ray microtomography imaging;
At least one detector capable of detecting emitted attenuated radiation of raw data targeted on the polycrystalline gem material;
A processor for processing said raw data such that a three-dimensional model of the analysed polycrystalline gem material is obtained, and followed by graphic visualisation by using specific attenuation coefficient attribution-algorithms based on X-ray absorptivity levels.

According to a third aspect of the invention, it relates to the use of the method or the system of the present invention in assessing the quality of the polycrystalline gem material.

At this end, it is reiterated that the present invention aims to generate fingerprints of a polycrystalline gem material, wherein the internal structure, composition, pattern, spatial distribution, fissures of the polycrystalline gem material can be observed through the X-ray microtomography of the present invention. Present invention is developed particularly for jadeite-jade gem materials.

According to one embodiment of the invention, the quality of the polycrystalline gem material is assessed in three-dimension for qualitative assessment such as inhomogeneity or distribution observation and/or transformed into diagrams for approximate quantitative assessment. This method allows the assessment of the quality of the polycrystalline gem material qualitatively and/or quantitatively.

According to one embodiment of the invention, the three-dimensional maps of each type of crystallite of the polycrystalline gem material are produced by using specific attenuation coefficient attribution-algorithms based on X-ray absorptivity levels or X-ray attenuation of each type of crystallite (mineral-specific) of the polycrystalline gem material. In other words, each signature of the mineral (or X-ray attenuated of the crystallite) are generated, for example from a series of 2D planar X-ray images and reconstruct the data into 2D cross-sectional slices. These slices of each individual type of crystallite can be further processed into 3D models such that it reveals its internal features.

According to one embodiment of the invention, the sample holder is movable in one, two, three or more degree of freedom relative to the at the least one X-ray source and the at least one detector.

According to one embodiment of the invention, the invention further comprising a step of generating a suitable scanning strategy from processed information, wherein the processed information is obtained based on such as distribution, position, orientation of one or more crystals of the polycrystalline gem material, in particular jadeite. In a yet further example, from the 3D model where each signature (e.g., internal texture, spatial distribution and amounts and etc.) of the crystallite is known, based on this information, a simplified scanning strategy can be used to scan polycrystalline gem material of the same batch, as they usually contains similar internal textures and spatial distribution. This allows a faster and more efficient assessment of the object prior to a more detailed investigation.

According to one embodiment of the invention, further compromising a step to generate a homogeneity analysis of a polycrystalline gem material via attenuation coefficient analysis to assist quality assessment in order to develop cutting strategy by visualising cutting options as 3D-cutting plans. This method provides an assistance to the user e.g., maximizing the value of the rough object by generating the best cutting strategy to the rough object.

According to one embodiment of the invention, the polycrystalline gem material is capable of a rotation and/or a translation position, for example through the sample holder along a predetermined plane to a predetermined angle.

According to one embodiment of the invention, the polycrystalline gem material is rotated in a rotation angle of about 180 ° to about 360 ° or more for taking of the X-ray microtomography imaging, wherein the images are taken in intervals of about 0.1 ° to about 1° or more.

According to one embodiment of the invention, the polycrystalline gem material is selected from rough stones, or half-processed stones; before processing the polycrystalline gem material for determining its value prior to purchasing or planning its subsequent process stages; in its processing stages such as cutting, cleaving, or polishing; or after these preparation process.

According to one embodiment of the invention, the processing of the assessment of the polycrystalline gem material including a direct grayscale image reconstruction of the internal structure of the polycrystalline gem material.

According to one embodiment of the invention, the invention further comprising a displacing means for repeatedly displace said polycrystalline gem material in respect to the emitter and the detector, to a predetermined location.

According to one embodiment of the invention, a scanning strategy from processed information is created, wherein the processed information is obtained based on such as distribution, position, orientation of one or more crystals of the polycrystalline gem material, in particular jadeite.

By "about" or "approximately" in relation to a given numerical value, it is meant to include numerical values within 10% of the specified value. All values given in the present disclosure are to be understood to be complemented by the word "about" unless it is clear to the contrary from the context.

The indefinite article "a" or "an" does not exclude a plurality, thus should be treated broadly.

The term "polycrystalline" refers to solid materials (e.g., gemstone) that consist of numerous tiny and densely intergrown crystals (also known as "grains") which normally have random crystallographic orientations. The size of the grains may vary from nanometers to millimeters. The outer shape of a polycrystalline material is not defined by a crystal form. Commonly, polycrystalline gemstones are highly durable and difficult to break. For example, jadeite-jade is a polycrystalline gem material, composed of many small interlocking crystals. This structure gives it great strength and its resistance to fracture. For these reasons, this gemstone can be fashioned into delicate carvings.

The term "radiation" as used herein refers to a process where energy is released from an emission source, e.g., photons.

The term "attenuated radiation" as used herein refers to a radiation which after interfering with a sample is directed to a surface, e.g., a detector. The attenuated radiation which is reaching the surface (of the detector) is being calculated.

The term "specific attenuation coefficient attribution-algorithms" as used herein is a model/algorithm developed where each of the mineral-specific X-ray attenuation coefficients is determined, for example by using fixed analytical parameters (of the system) and mineralogically well-defined reference samples. The algorithm is developed by firstly reading and assessing the X-ray attenuated signatures of each of the possible crystalline (or crystalline of interest) of a polycrystalline gem material using the processed raw data on selected reference samples of defined mineralogical composition (grey level intensities of selected tomography sections). In addition, reference samples are sliced (thin sections) along the selected tomography sections and analysed using such as petrographic methods (e.g., polarisation microscopy), Raman spectroscopy, and chemical methods (e.g., electron microprobe), so to be able to attribute specific attenuation coefficients to mineral species. This approach is also considering chemical variation within a mineral species or mineral group (e.g., chromium concentration), as such chemical variations may impact attenuation coefficients of a sample and at the very end the quality of a polycrystalline gemstone.

To this end, it is reiterated herein that present invention according to all embodiments allows an assessment of the internal texture of partly or fully nontransparent stones, thus providing vital information to both, the buyer of the rough stone and the cutter prior to any fashioning. In addition, present invention can also be applied on already fashioned polycrystalline gem materials used for jewellery to check the internal quality of the gem material and to recognize possible future damage due to internal zones of weakness (e.g., internal fractures) not visible from the outside.

### Brief Description of Drawings

The present invention will be explained in more detail, by way of example, with reference to the drawings in which:
Figure 1 schematically shows a method and an imaging system according to an embodiment of the present invention.
Figure 2 is an X-ray microtomography section through rough sample.
Figures 3A-3E are X-ray microtomography section through rough sample after data processing using specific attenuation coefficient attribution-algorithms.
Figure 4 is a diagram showing the distribution of the attenuation number(s) within the volume of an analysed sample.

### Description of Details of the Invention

Present invention allows assessment and visual inspection of the internal texture of a polycrystalline material in three-dimension at high resolution using X-rays microtomography, wherein the assessment method is a non-invasive method of scanning the contour of a stone i.e., polycrystalline gem material, and processed the raw data into three-dimension model for subsequent analyses.

By applying appropriate algorithms, the analyzed raw data can be processed in such a way that for example material inhomogeneities and spatial distribution, fissures and cavities along grain boundaries can be visualized in three-dimension and/or be transformed into diagrams, which then can be used for a standardized assessment of the quality of polycrystalline gem materials. More importantly, present invention generates detailed fingerprints of each type of crystal within the polycrystalline gem material e.g., in form of a three-dimension map. Each individual 3D map (representing each type of crystal) can furthermore be overlaid such that the material inhomogeneities and their spatial distributions can be visualized.

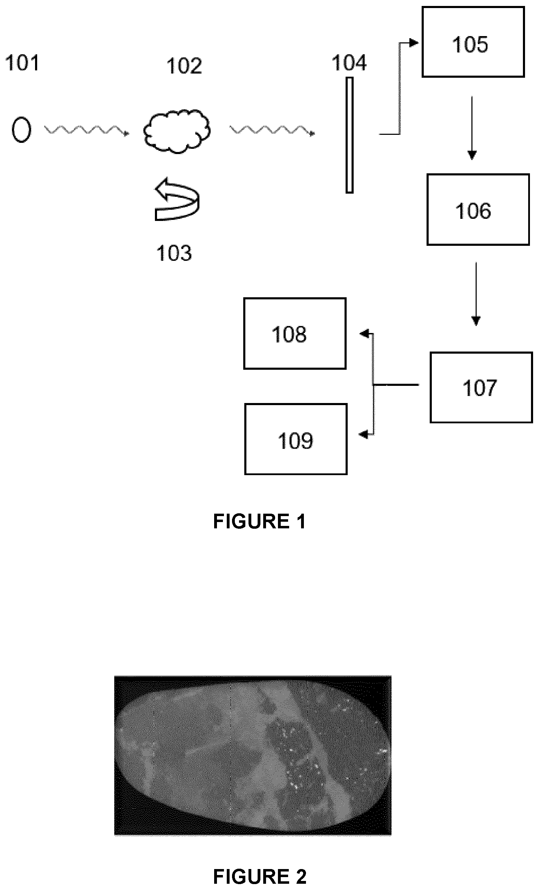

Figure 1 illustrates in a scheme of method according to an embodiment of the present invention. An X-ray source 101 is provided to the present imaging system, capable of emitting high energy radiation towards a sample 102 e.g., polycrystalline gem material. The sample 102 is positioned on a sample holder, wherein the sample holder is rotatable in at least one degree of freedom 103. The sample 102 may be rotated to a predetermined angle. Moreover, the rotation of the sample can be provided in a XY plane, or along a plurality of planes such as XZ, YZ or XYZ by repositioning of the sample.

The radiation transmitted through the sample is then collected by X-ray high resolution detector 104, where a grating interferometer may optionally be provided. The analyzed data is then processed by a processor (e.g., computer 105) to create a virtual 3D-model of the analyzed polycrystalline gem material on a screen 106. By using specific attenuation coefficient attribution-algorithms 107, the processed data is then again visualized in processed three-dimension images 108 and/or diagrams 109 based on X-ray absorptivity levels. Using the processed 3D visualization and/or diagrams, it is then consequently possible to assess first the homogeneity of the polycrystalline gemstone and consequently its quality and to distinguish different quality grades when comparing to reference materials.

The imaging system according to present invention comprises an X-ray microtomography (micro-CT), or also known as a micro computed tomography. Micro-CT is a 3D imaging technique utilizing X-rays to see inside an object, slice by slice. Samples can be imaged with pixel sizes as small as 100 nanometers and objects can be scanned as large as 200 millimeters or more in diameter. The present system allows the capture of a series of 2D planar X-ray images and reconstruct the data into 2D cross-sectional slices. These slices can be further processed into 3D models such that it reveals its internal features. It provides volumetric information about the microstructure, nondestructively.

As an example, present invention allows an easy data acquisition, whereby X-ray beam originates from a small focal point and illuminates a planar detector. The sample is fixed in a sample holder and rotated to obtain several projections over a range of angles and positions. The 2D image slices are reconstructed from these projections, whereas afterwards it can be stacked and rendered to create the 3D volume for displaying purposes.

Hence, it is clear that the present system records the mineral-specific (i.e., each type of the crystalline of the polycrystalline gem material) differences in X-ray attenuation by the object. The mineral-specific X-ray attenuation coefficients can be determined by using fixed analytical parameters (of the system) and mineralogically well-defined reference samples. Attenuation is described as the proportion of the X-ray that interacts with the material and represented by the grey intensities in the reconstructed slice images. The interaction between the material and the X-ray beam decreases the intensity of the X-ray as it passes through the volume. Figure 2 is an X-ray microtomography section through rough sample, wherein different X-ray absorption zones related to material inhomogeneities is shown. Different grey intensities are observed, indicating the material inhomogeneities of the polycrystalline gem material.

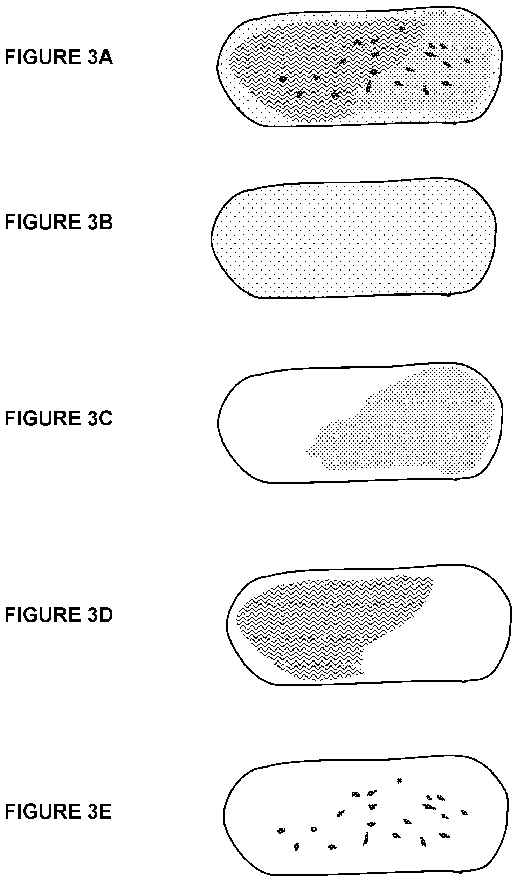

Figures 3A-3E are schematic X-ray microtomography sections through a rough sample after data processing using specific attenuation coefficient attribution-algorithms. As different mineral species (or crystal) has its characteristic X-ray attenuation coefficient, hence by applying appropriate algorithms, the internal texture and distribution of each of the mineral species within the analysed polycrystalline gemstone can be processed and visualised. As an example, the material inhomogeneities in this sample can be attributed to three main mineral phases at the same section and level. Figure 3B shows the internal texture or distribution of Na-feldspar, while Figure 3C shows the internal texture or predominant distribution of Cr-omphacite while Figure 3D shows the internal texture or predominant distribution of jadeite, while Figure 3E shows undefined accessory mineral phase. Figure 3A represents an overlay of Figures 3B to 3E from the same section.

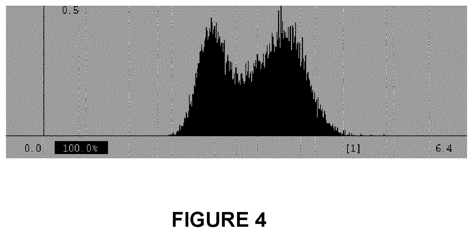

Figure 4 is a diagram, showing the distribution of the attenuation-coefficient(s) within the full volume of an analyzed sample. The bimodal distribution (two peaks) represents two mineral phases. In other words, the polycrystalline sample shows a distinct material inhomogeneity, as it actually is a mix of two mineral phases. The ± equivalent area of the peaks allows an approximate quantification of both phases as being ± equal in quantity in this sample. As shown by this example, the shape of the distribution curve (unimodal, bimodal, multimodal) and the size of the distribution curve can be used as (numerical) quality criterion. This criterion can be further elaborated by combining also the shape (standard dev.) of the attenuation coefficient peak(s), being from sharp (highest homogeneity) to broad (lower homogeneity e.g. due to chemical inhomogeneities within a specific mineral species).

To this end, it is reiterated that the concept of X-ray attenuation as proposed in the present allows a direct quality assessment of the full volume of polycrystalline gem materials in 3D, which adds new and a further depth of information as compared to other methods which only give limited information e.g., only at the surface.

## Claims

1. A method of assessing the quality of a polycrystalline gem material using an X-ray microtomography imaging, wherein the assessment comprises a three-dimensional map of the gem material, comprising the steps of:
Providing the polycrystalline gem material to a sample holder of an imaging apparatus such that the polycrystalline gem material to be scanned is located in a radiation path comprising at least one emitter and at least one detector synchronised by a processor;
Radiating the mounted polycrystalline gem material with the emitter having at least one X-ray source while either moving the sample holder relative to the at least one X-ray source and the at least one detector, or vice versa;
Detecting emitted attenuated radiation of raw data with the detector;
Processing the raw data by creating a virtual three-dimensional model of the analysed polycrystalline gem material, and followed by graphic visualisation by using specific attenuation coefficient attribution-algorithms based on X-ray absorptivity levels;
Removing the polycrystalline gem material from the sample holder.

2. Method according to claim 1, wherein the quality of the polycrystalline gem material is assessed in three-dimension for qualitative assessment such as inhomogeneity or distribution observation and/or transformed into diagrams for approximate quantitative assessment.

3. The method according to claim 1 or claim 2, wherein the three-dimensional maps of each type of crystallite of the polycrystalline gem material are produced by using specific attenuation coefficient attribution-algorithms based on X-ray absorptivity levels or X-ray attenuation of each type of crystallite of the polycrystalline gem material.

4. The method according to any one of the preceding claims, the sample holder is movable in one, two, three or more degree of freedom relative to the at the least one X-ray source and the at least one detector.

5. The method according to any one of the preceding claims, further comprising a step of generating a suitable scanning strategy from processed information, wherein the processed information is obtained based on such as distribution, position, orientation of one or more crystals of the polycrystalline gem material, in particular jadeite.

6. The method according to any one of the preceding claims, further compromising a step to generate a homogeneity analysis of a polycrystalline gem material via attenuation coefficient analysis to assist quality assessment in order to develop cutting strategy by visualising cutting options as 3D-cutting plans.

7. The method according to any one of the preceding claims, wherein the polycrystalline gem material is capable of a rotation and/or a translation position, for example through the sample holder along a predetermined plane to a predetermined angle.

8. The method according to any one of the preceding claims, wherein the polycrystalline gem material is rotated in a rotation angle of about 180° to about 360° or more for taking of the X-ray microtomography imaging, wherein the images are taken in intervals of about 0.1° to about 1° or more.

9. The method according to any one of the preceding claims, wherein the polycrystalline gem material is selected from rough stones, or half-processed stones; before processing the polycrystalline gem material for determining its value prior to purchasing or planning its subsequent process stages; in its processing stages such as cutting, cleaving, or polishing; or after these preparation process.

10. The method according to any one of the preceding claims,
wherein the processing of the raw data for the assessment of the quality of the polycrystalline gem material includes a direct grayscale image reconstruction of the internal structure of the polycrystalline gem material.

11. A system for assessing the quality of a polycrystalline gem material, wherein the assessment comprises a three-dimensional map of the gem material comprising:
A sample holder provided to receive a polycrystalline gem material;
An X-ray microtomography, comprising at least one emitter comprising an X-ray source;
At least one detector capable of detecting emitted attenuated radiation of raw data targeted on the polycrystalline gem material;
A processor for processing said raw data such that a three-dimensional model of the analysed polycrystalline gem material is obtained, and followed by graphic visualisation by using specific attenuation coefficient attribution-algorithms based on X-ray absorptivity levels.

12. The system according to claim 11, further comprising a displacing means for repeatedly displace said polycrystalline gem material in respect to the emitter and the detector, to a predetermined location.

13. The system according to claim 11 or claim 12, wherein a scanning strategy from processed information is created, wherein the processed information is obtained based on such as distribution, position, orientation of one or more crystals of the polycrystalline gem material, in particular jadeite.
